(19) Europäisches Patentamt
European Patent Office
Office européen des brevets

(11) **EP 4 261 730 A1**

(12) **EUROPÄISCHE PATENTANMELDUNG**

(43) Veröffentlichungstag:
**18.10.2023  Patentblatt 2023/42**

(21) Anmeldenummer: **23165760.2**

(22) Anmeldetag: **31.03.2023**

(51) Internationale Patentklassifikation (IPC):
**G06F 30/17** *(2020.01)*  **G06F 30/23** *(2020.01)*
**G06F 119/14** *(2020.01)*

(52) Gemeinsame Patentklassifikation (CPC):
**G06F 30/17; G06F 30/23;** G06F 2119/14

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **13.04.2022  DE 102022109024**
**17.08.2022  DE 102022120752**

(71) Anmelder: **fischerwerke GmbH & Co. KG**
**72178 Waldachtal (DE)**

(72) Erfinder:
• **Bokor, Boglárka**
**73760 Ostfildern (DE)**
• **Pregartner, Thilo**
**65189 Wiesbaden (DE)**
• **Sharma, Akanshu**
**Lafayette, IN 47907 (US)**

(74) Vertreter: **Suchy, Ulrich Johannes**
**fischerwerke GmbH & Co. KG**
**Gewerbliche Schutzrechte**
**Klaus-Fischer-Strasse 1**
**72178 Waldachtal (DE)**

(54) **COMPUTERIMPLEMENTIERTES VERFAHREN ZUR BESTIMMUNG EINER OPTIMIERTEN ANKERPLATTENDICKE**

(57)  Die Erfindung betrifft ein computerimplementiertes Verfahren zur Bestimmung einer optimierten Mindestdicke $d_{opt}$ einer aus Stahl gefertigten Ankerplatte (2) in einer an Beton zu befestigenden Ankerplattenanordnung (1) welche die Ankerplatte (2), eine Mehrzahl von in den Beton eingreifenden Ankern ($A_1$ - $A_4$) und ein mit der Ankerplatte (2) verbundenes Profil (4) umfasst, wobei in dem computerimplementierten Verfahren zur Bestimmung der optimierten Mindestdicke $d_{opt}$ eine Mehrzahl von Parametern iterativ ermittelt werden.

Fig. 1

EP 4 261 730 A1

**Beschreibung**

Die Erfindung betrifft ein computerimplementiertes Verfahren zur Bestimmung einer optimierten Mindestdicke einer aus Stahl gefertigten Ankerplatte gemäß des Anspruchs 1, eine durch das Verfahren erhältliche Ankerplatte gemäß Anspruch 9, eine Vorrichtung zur Bestimmung einer Ankerplattendicke gemäß Anspruch 10 sowie ein Computerprogramm zur Durchführung des Verfahrens gemäß Anspruch 12.

Die Kriterien für eine ausreichend steife Ankerplatte sind in den derzeitigen Bemessungsvorschriften nicht klar definiert. Eine Grundvoraussetzung für die Bemessung von Verankerungen nach den derzeit aktuellen Verfahren ist die Forderung, dass die Ankerplatte ausreichend steif ist und die Verformung im Vergleich zu den Verschiebungen der Anker, mittels welcher die Ankerplatte befestigt ist, klein ist. Nach den geltenden Richtlinien kann eine Ankerplatte in einer Ankerplattenbefestigung an einem Befestigungsgrund als ausreichend steif angesehen werden, wenn sie unter den Einwirkungen, also den Lasten, die die Ankerplatte erfährt, linear elastisch bleibt und ihre Verformung im Vergleich zu den axialen Verschiebungen der Anker vernachlässigbar ist. Häufig wird eine Ankerplatte bei den aktuellen Verfahren als steif angesehen, indem nur sichergestellt wird, dass die Ankerplatte unter Last linear elastisch bleibt. Dies kann dazu führen, dass eine Ankerplatte in einer Anordnung nur unzureichend ausgelegt wird.

Aufgabe der Erfindung ist es, ein Verfahren bereitzustellen, mittels welchem eine Ankerplatte in einer Ankerplattenanordnung derart mit einer möglichst geringen Dicke ausgelegt werden kann, dass die Ankerplatte elastisch bleibt, die Kraftverteilung und die Verformung der Ankerplatte einen linearen Verlauf aufweisen und die Ankerplatte dadurch als ausreichend steif angesehen werden kann. Weiter ist es Aufgabe der Erfindung, eine mittels dieses Verfahrens erhaltene Ankerplattendicke vorzuschlagen. Nebengeordnet ist es eine weitere Aufgabe der Erfindung, eine Vorrichtung zur Bestimmung einer derartigen Ankerplattendicke sowie ein Computerprogramm zur Durchführung des Verfahrens vorzuschlagen. Diese Aufgaben werden erfindungsgemäß durch die Merkmale der Ansprüche 1, 9, 10 und 12 gelöst.

Die Erfindung betrifft ein computerimplementiertes Verfahren zur Bestimmung einer optimierten Mindestdicke $d_{opt}$ einer aus Stahl gefertigten Ankerplatte in einer an Beton zu befestigenden Ankerplattenanordnung, welche die Ankerplatte, eine Mehrzahl von in den Beton eingreifenden Ankern $A_i$ und ein mit der Ankerplatte verbundenes Profil umfasst, wobei zur Durchführung des Verfahrens die folgenden Parameter als Ausgangsgrößen, respektive Eingangsparameter festgelegt werden:

- Verankerungsgrund: Hierbei wird die Betonfestigkeitsklasse, beispielsweise C20/25 und der Zustand des Betons (gerissen oder ungerissen) definiert. Zudem können die Betonart, beispielsweise Normalbeton, und die An- oder Abwesenheit einer Betonbewehrung berücksichtigt werden.
- Ankerplattengeometrie: Insbesondere wird hierbei die Form der Ankerplatte festgelegt. Die Ankerplatte weist zumeist eine rechteckige Gestalt auf. Jedoch kann die Ankerplatte auch eine runde, ovale oder mehreckige Form aufweisen.
- Stahlgüte der Ankerplatte: Insbesondere wird hier die Stahlgüte und das Elastizitätsmodul definiert.
- Ankertyp und Ankeranordnung auf der Ankerplatte: In Zusammenhang mit der vorliegenden Erfindung können dabei als Anker beispielsweise Spreizanker, Verbundanker oder andere geeignete Arten von Ankern verwendet werden. Unter der Ankeranordnung ist insbesondere der Abstand der Anker zu den Rändern der Ankerplatte sowie die Ankerkonfiguration zu verstehen.
- Ankerdurchmesser und Verankerungstiefe der Anker: Hier wird definiert, welche Durchmesser die Anker aufweisen und wie tief die jeweiligen Anker in dem Beton der Ankerplattenanordnung verankert sind.
- Profilparameter und Profilanordnung auf der Ankerplatte: Hierbei wird das Profil selbst sowie dessen Position (z.B. zentrisch, exzentrisch oder gedreht) auf der Ankerplatte definiert.
- Aussteifung der Ankerplatte: Optional kann die Anwesenheit von Aussteifungen berücksichtigt werden. Sind Aussteifungen vorhanden, werden insbesondere deren Form (z.B. dreieckig, trapezförmig oder polygonförmig) sowie Ausdehnungen definiert.
- Einwirkung auf die Ankerplatte: Insbesondere ist hierunter die Bemessungslast zu verstehen, die auf die Ankerplatte, respektive die Ankerplattenanordnung einwirkt, sowie insbesondere das Biegemoment und das Torsionsmoment sowie deren Kombination zu verstehen.

Das Verfahren umfasst die Durchführung eines ersten Auslegungsverfahrens. "Erstes Auslegungsverfahren" meint hier, dass es ein weiteres Auslegungsverfahren geben kann, aber nicht muss. Für dieses erste Verfahren kann beispielsweise das Modul C-FIX der Software FiXperience Online verwendet werden, in welchem ein lineares Federmodell in Kombination mit FEM, also der Methode der finiten Elemente implementiert ist. Das lineare Federmodell ist beispielsweise in dem Artikel von B. Bokor, T. Pregartner und A. Sharma "Displacement-Based Design of Anchorages in Concrete - The future of fastening technology, Concrete International, 44(2), 2022, pp. 22-27" beschrieben. Mittels des linearen Federmodells, indem jedem Anker in einer Ankerplattenanordnung die entsprechende Federkennlinie zugeordnet ist und der FEM-Methode können die Steifigkeit und die Verformungen einer Ankerplatte durch Modellierung der Ankerplatte und des Profils mit finiten Schalen- oder Volumenelementen bestimmt werden. Eine Grundidee des ersten Auslegungsverfahrens ist die Analyse der definierten Ankerplattenanordnung einerseits unter Annahme einer ideal steifen Ankerplatte, sowie andererseits einer realitätsnahen, also flexiblen Ankerplatte, wobei die beiden Analysen miteinander verglichen werden. Durch den Vergleich beider Analysen, also der identischen Ankerplattenanordnungen, ist ein Vergleich der jeweiligen Kräfte der Anker möglich und es können Rückschlüsse auf die Steifigkeit, respektive die Verformung der Ankerplatte gezogen werden. Zur Vereinfachung der Beschreibung wird im Folgenden angenommen, dass vier Anker $A_1$ bis $A_4$ in der Ankerplattenanordnung enthalten sind. Das Verfahren ist jedoch auf beliebig viele Anker $A_n$ übertragbar.

In dem ersten Auslegungsverfahren werden computerimplementiert, insbesondere mittels des Moduls C-FIX, folgende Verfahrensschritte ausgeführt:

a) eine Ankerplattendicke $d_0$ wird unter der Annahme der Einwirkung auf die Ankerplatte insbesondere nach der Spannungshypothese nach von-Mises so ausgelegt, dass die Ankerplatte möglichst dünn ist und unter der Bemessungslast elastisch bleibt und sich nicht plastisch verformt. Die Verwendung dieses Kriteriums ist aus dem Stand der Technik bekannt und wird in der Praxis im Stahlhochbau eingesetzt und eignet sich für alle Materialien, die nicht spröde sind, insbesondere für Stähle. Das Kriterium kann für die Auslegung von Ankerplatten verwendet werden (Vgl. *"Zusatzmodul RF-STAHL; Allgemeine Spannungsanalyse von Flächen und Stäben, Programmbeschreibung, Dlubal Software GmbH, Fassung Dezember 2017"*). Die Dicke $d_0$ muss die in der Ankerplattenanordnung verwendete Ankerplatte unter Einbeziehung der Einwirkung auf die Ankerplattenanordnung mindestens aufweisen, um ein elastisches Verhalten zu gewährleisten. Die Methode nach von-Mises ist eine beispielhafte Möglichkeit zur Bestimmung der Ankerplattendicke da. Weitere Methoden sind denkbar.

b) Eine idealisierte Kraft $N_{iS}$ eines jeden Ankers $A_i$ in der Anordnung wird unter der Annahme einer linearen Verteilung der Kräfte und einer starren Ankerplatte bestimmt, wobei $N_{iS}$ die Kraft in Newton (N) auf einen jeden Anker $A_i$ in der Anordnung mit i = 1 bis n ("n" = Anzahl der Anker in der Ankerplattenanordnung) bezeichnet, unter der Annahme einer starren Ankerplatte ("S" = starr). In diesem Schritt wird also von einer ideal steifen, das heißt einer idealisierten Ankerplatte ausgegangen. Dies führt im Regelfall dazu, dass die Kraft auf die Anker $A_i$ nur geringfügig von einer linearen Verteilung abweicht. Insbesondere ist eine gerade Anzahl von Ankern $A_i$ auf der Ankerplatte verteilt. Diese sind insbesondere symmetrisch auf der Ankerplatte angeordnet.

c) Es wird eine realitätsnahe Kraft $N_i$ auf jeden der Anker $A_i$ in der Anordnung insbesondere mittels FEM bestimmt. Insbesondere liegen sowohl diesem unter c) beschrieben Schritt als auch dem unter b) beschriebenen Schritt das eingangs erwähnte lineare Federmodell zugrunde. Die realitätsnahe Kraft $N_i$ basiert also auf einer realitätsnahen im Sinne einer nachgiebigen Ankerplatte, wodurch die Kraft $N_i$ auf die jeweiligen Anker $A_i$ im Regelfall deutlich unterschiedlich sein kann.

d) Eine Ankerplattendicke $d_1$ wird derart bestimmt, dass sie möglichst klein ist und die größte prozentuale Abweichung der idealisierten Kraft des idealisiert gerechneten höchst belasteten Ankers $A_{max}$ von der realitätsnahen Kraft dieses Ankers unter einem Schwellwert $X_1$ liegt. Es können mehrere der Anker $A_i$ höchstbelastet sein, wenn nur der idealisierte Fall betrachtet wird. In diesem Fall wird unter den höchstbelasteten Ankern der Anker mit der größten Abweichung zwischen der idealisierten und der realitätsnahen Kraft verwendet. Dieser Schritt basiert auf der Formel

$$\Delta_{max} = \left| \frac{N_h - N_{hS}}{N_{hS}} \right| \leq X_1\% \qquad (1)$$

wobei $\Delta_{max}$ die größte prozentuale Abweichung, $N_{hS}$ die Kraft des höchst belasteten Ankers unter Annahme einer idealisierten Ankerplatte und $N_h$ die Kraft desselben Ankers unter Annahme einer flexiblen Ankerplatte bezeichnet. Sind also beispielsweise vier Anker $A_1$ bis $A_4$ in der Ankerplattenanordnung enthalten und wird beispielsweise $A_1$ als der Anker $A_{max}$ mit der höchsten Belastung unter Annahme einer idealisierten starren Ankerplatte identifiziert, wird basierend auf diesem Anker die Ankerplattendicke $d_1$ angepasst, so dass die Abweichung kleiner oder gleich dem besagten Schwellwert $X_1$ ist. Die Ermittlung von $d_1$ erfolgt insbesondere iterativ was bedeutet, dass in diesem Verfahrensschritt die Ankerplattendicke $d_1$ derart oft sukzessive verringert wird, solange das Kriterium, definiert durch die Formel (1), noch erfüllt ist. Ist das Kriterium nicht mehr erfüllt unterschreitet die Ankerplattendicke eine kritische Schwelle und das Verfahren wird abgebrochen.

e) Eine Ankerplattendicke $d_2$ wird derart bestimmt, dass sie möglichst klein ist und die maximale prozentuale Abweichung der Summe der realitätsnahen Kräfte jedes Ankers $A_i$ von der Summe der idealisierten Kräfte der Anker $A_i$ unter einem Schwellwert $X_2$ liegt. In diesem Schritt werden also alle Anker $A_i$ in der Ankergruppe berücksichtigt gemäß der Formel:

$$\Delta_{sum} = \frac{\sum_{i=1}^{n} N_i - \sum_{i=1}^{n} N_{iS}}{\sum_{i=1}^{n} N_{iS}} \leq X_2\%, \qquad (2)$$

wobei $\Delta_{sum}$ die Summe der prozentualen Abweichungen beschreibt. Auch dieser Verfahrensschritt erfolgt genau wie der Schritt unter d), insbesondere iterativ.

f) Es wird eine erste Kraftdifferenz $S_1$ zwischen der idealisierten Kraft $N_{hS}$ des höchst belasteten Ankers $A_{max}$ und der idealisierten Kraft $N_{nS}$ des niedrigst belasteten Ankers $A_{min}$ und eine zweite Kraftdifferenz $S_2$ der realitätsnahen Kräfte $N_h$ und $N_n$ zwischen denselben Ankern $A_{max}$ und $A_{min}$ ermittelt. Anschließend wird der Quotient zwischen der zweiten Kraftdifferenz $S_2$ und der ersten Kraftdifferenz $S_1$ gebildet (Vgl. Formel (3) unter Schritt g)). Die erste Kraftdifferenz $S_1$ und die zweite Kraftdifferenz $S_2$ können als eine Art erster und zweiter Steigung aufgefasst beziehungsweise verdeutlicht werden:

Wird bei den vier Ankern $A_1$ bis $A_4$ in der Ankerplattenanordnung beispielsweise $A_1$ als der Anker identifiziert, der die höchste Belastung $N_h$ erfährt und $A_2$ als der Anker identifiziert, der die niedrigste Last $N_n$ erfährt, können die geometrische Lage dieser beiden Anker auf der Ankerplatte, genauer formuliert ein Abstand s dieser beiden Anker zueinander bestimmt werden. Der Abstand s zueinander ist beispielsweise auf der Abszisse eines 2D-Koordinatensystems darstellbar, während die Kräfte auf der Ordinate dargestellt werden können. Die erste Kraftdifferenz kann als $S_1 = \frac{N_{hS} - N_{nS}}{s}$ und die zweite Kraftdifferenz $S_2$ kann als $S_2 = \frac{N_h - N_n}{s}$ dargestellt werden. Der Abstand s ist identisch, wodurch dieser bei der Quotientenbildung entfällt (Vgl. Formel (3) unter Schritt g)). Diese Art der grafischen Darstellung wird später noch explizit ausgeführt.

g) Eine Ankerplattendicke $d_3$ wird derart bestimmt, dass sie möglichst klein ist und die Abweichung der Kraftdifferenzen $S_1$ und $S_2$ voneinander, wie oben unter f) dargestellt, unter einem Schwellwert $X_3$ liegt. Dieser Bestimmung liegt die Formel:

$$\Delta_{Kraftdifferenz(Steigung)} = \left| \frac{N_h - N_n}{N_{hS} - N_{nS}} - 1 \right| \leq X_3\% \quad (3)$$

zugrunde. Auch dieser Verfahrensschritt erfolgt insbesondere iterativ.

Es kann der Fall auftreten, dass ein Schwerpunkt eines symmetrischen oder asymmetrischen Profils auf der Ankerplatte außerzentrisch orientiert ist und/oder dass eine mehrachsige Biegung auftritt, die zu einer mehrachsigen Momentbelastung führt. In diesem Fall kann der letztgenannte Verfahrensschritt präzisiert und Gleichung (3) entsprechend erweitert werden.

Zur Erläuterung wird im Folgenden beispielhaft von einer zweiachsigen Biegung, respektive einer zweiachsigen Momentbelastung ausgegangen. Zudem werden beispielhaft neun Ankern $A_1$ bis $A_9$. angenommen. Die neun Anker sind hierbei in einem Raster aus 3 Reihen und 3 Spalten auf der Ankerplatte angeordnet, wobei einer Reihe als erste Achse eine X-Achse und einer Spalte als zweite Achse eine Y-Achse zugewiesen ist. Beide Achsen sind insbesondere orthogonal zueinander. Es muss in der Anordnung derjenige Anker bestimmt werden, der unter Annahme einer ideal starren Ankerplatte die höchste Last trägt. Wird bei den neun Ankern $A_1$ bis $A_9$ in der Ankerplattenanordnung beispielsweise $A_5$ als $A_{max}$ identifiziert, wobei $A_5$ im Zentrum der Ankeranordnung liegt, dann werden zum einen die entsprechenden Anker betrachtet, die in X-Richtung $A_{max}$ kreuzen und zum anderen die entsprechenden Anker, die in Y-Richtung $A_{max}$ kreuzen. Anders formuliert werden die Anker betrachtet, die mit dem höchstbelasteten Anker in einer gleichen Reihe und in einer gleichen Spalte sind. Anschließend wird der niedrigst belastete Anker in X-Richtung, also in der Reihe, und in Y-Richtung, also in der Spalte, bestimmt, wodurch sich obige Formel (3) wie folgt präzisieren, respektive erweitern lässt:

$$\Delta_{Kraftdifferenz(Steigung),X} = \left| \frac{N_h - N_{n,X}}{N_{hS} - N_{nS,X}} - 1 \right| \leq X_3\%$$

$$\Delta_{Kraftdifferenz(Steigung),Y} = \left| \frac{N_h - N_{n,Y}}{N_{hS} - N_{nS,Y}} - 1 \right| \leq X_3\%$$

Für die Ankerplattendicke $d_3$ ist der Maximalwert der ermittelten Kraftdifferenzen ($\Delta_{Kraftdifferenz(Steigung)}$; $\Delta_{Kraftdifferenz(Steigung),X}$; $\Delta_{Kraftdifferenz(Steigung),Y}$) maßgeblich. Wird beispielhaft $\Delta_{Kraftdifferenz(Steigung),Y}$ als Maximalwert ermittelt, wird somit diese Kraftdifferenz in Y-Richtung für die Ermittlung von $d_3$ verwendet.

In einem finalen Schritt werden die ermittelten Ankerplattendicken $d_0$, $d_1$, $d_2$, und $d_3$ miteinander verglichen und die größte der Ankerplattendicken ausgewählt. Mit Hilfe der Ankerplattendicke, die den größten Wert aufweist, ist eine Ankerplatte herstellbar, die unter den gegebenen oben definierten Bedingungen in der Ankerplattenanordnung elastisch bleibt und ein lineares Verformungsprofil aufweist und die Kraftverteilung ebenfalls linear ist. Diese Ankerplattendicke wird als $d_{opt}$ bezeichnet. Durch den beschriebenen ersten Verfahrensschritt ist es also möglich, eine Ankerplatte zu fertigen, die eine ausreichende Ankerplattendicke $d_{opt}$ aufweist. Die Schritte a) bis g) des ersten Auslegungsverfahrens müssen nicht zwangsläufig in der dargestellten Reihenfolge durchgeführt werden. Abhängig von der verwendeten Software kann die Reihenfolge variieren. Die einzelnen Schritte können zudem nahezu oder gänzlich zeitgleich erfolgen.

Das oben beschriebene erste Auslegungsverfahren liefert in den meisten Fällen ein verlässliches Ergebnis. Ist jedoch eine Ankerplatte in der Ankerplattenanordnung einer im Wesentlichen zentrischen Zuglast ausgesetzt, versagt das erste Auslegungsverfahren, da der unter g) aufgeführte Schritt keine verlässlichen Werte liefert. Die Formel unter g) liefert für den Fall des zentrischen Zugs einen fehlerhaften bzw. nicht verlässlichen Wert, da $N_{hS}$ und $N_{nS}$ nahezu identisch sind und folglich der Nenner sehr klein Wert ergibt, wodurch keine sinnvollen und verlässlichen Steigungsänderung bestimmbar sind. Für den Fall des im Wesentlichen zentrischen Zugs in einer Ankerplattenanordnung wird ein zweites Auslegungsverfahren vorgeschlagen, insbesondere um derartige zentrische Zuglasten zu berücksichtigen. Ist von einem im Wesentlichen zentrischen Zug auszugehen, kann auf die Durchführung des ersten Auslegungsverfahrens verzichtet werden. In dem zweiten Auslegungsverfahren wird:

a) Der Anker $A_{max*}$ mit der größten prozentualen Abweichung zwischen der idealisierten und der realitätsnahen Kraft wird ermittelt.

b) Eine Ankerplattendicke $d_4$ derart bestimmt, dass sie möglichst klein ist und die prozentuale Abweichung zwischen der idealisierten und der realitätsnahen Kraft des Ankers $A_{max*}$ mit der größten prozentualen Abweichung unter einem vierten Schwellwert $X_4$ liegt. Dieser

Schritt liegt die folgende Formel zugrunde und erfolgt ebenfalls insbesondere iterativ, wie auch die Schritte des ersten Auslegungsverfahrens:

$$\Delta_{max} = \frac{max}{n} \left| \frac{N_i - N_{iS}}{N_{iS}} \right| \leq X_4 \%,$$

Unter der erneut beispielhaften Annahme, dass der Anker $A_1$ der Ankerplattenanordnung der Anker $A_{max*}$ mit der größten prozentualen Abweichung zwischen der idealisierten und der realitätsnahe Ankerkraft ist, stellt sich die Formel wie folgt dar:

$$\Delta_{max} = \left| \frac{N_1 - N_{1S}}{N_{1S}} \right| \leq X_4 \%.$$

Der Wert $d_4$ wird mit dem Wert $d_0$ verglichen, welcher dem Wert $d_0$ des ersten Auslegungsverfahrens entspricht und folglich nicht erneut bestimmt werden muss. Wird das zweite Auslegungsverfahren vor dem ersten Auslegungsverfahren durchgeführt, muss der Wert $d_0$ einmalig bestimmt werden, beispielsweise nach dem im ersten Auslegungsverfahren beschriebenen Vorgehen. Die größere der Ankerplattendicken $d_0$ und $d_4$ definiert eine Ankerplattendicke $d_{linear}$, bei welcher die Ankerplatte in der Ankerplattenanordnung ein lineares Verformungsprofil aufweist und die Kraftverteilung linear ist. Untersuchungen haben gezeigt, dass das zweite Auslegungsverfahren bei nicht zentrischem Zug zumeist unnötig dicke Ankerplattendicken ergibt, was darauf zurückzuführen ist, dass das zweite Auslegungsverfahren lediglich die größte prozentuale Abweichung zwischen der idealisierten und der realitätsnahen Kraftverteilung in der Ankerplattenanordnung berücksichtigt. Die Werte von $d_1$, $d_2$, und $d_3$ liegen zumeist unter dem Wert von $d_4$. Das erste Auslegungsverfahren ist bei nicht zentrischer Zugbelastung zu bevorzugen, da dieses meist eine deutlich geringere Ankerplattendicke liefert. Bei rein zentrischer oder im Wesentlichen Zugbelastung muss zwangsläufig das zweite Verfahren verwendet werden.

Werden sowohl das erste als auch das zweite Auslegungsverfahren durchgeführt, können die Ankerplattendicken $d_{opt}$ und $d_{linear}$ der Ankerplatten unter der vordefinierten Ankerplattenanordnung miteinander verglichen werden. Der kleinere Wert der beiden Ankerplattendicken kann dann verwendet werden, um eine Ankerplatte mit einer linearen Kraftverteilung und einem linearen Verformungsprofil zu erhalten. In den Fällen, in denen die Zuglast nicht-zentrisch ist, ist dies in den meisten Fällen die Ankerplattendicke $d_{opt}$. Das erste und das zweite Auslegungsverfahren können verwendet werden, um eine Ankerplatte für eine neu zu konzipierende Ankerplattenanordnung auszulegen. Jedoch ist es auch möglich, bereits bestehende Ankerplattenanordnungen mit Hilfe der beiden Auslegungsverfahren zu untersuchen. So kann beispielsweise mit Hilfe des ersten Auslegungsverfahrens untersucht werden, ob die Ankerplatte ein lineares Verformungsprofil aufweist und ob die verwendete Ankerplatte unter der gegebenen Einwirkung hätte dünner konzipiert werden können oder ob die Ankerplatte dicker werden muss um die Anforderungen einer ausreichend steifen Ankerplatte zu erfüllen.

In einer bevorzugten Ausgestaltung der Erfindung liegt den Schritten b) und c) ein insbesondere lineares Federmodell zugrunde, welches beispielsweise in: B. Bokor, T. Pregartner und A. Sharma "Displacement-Based Design of Anchorages in Concrete - The future of fastening technology, Concrete International, 44(2), 2022, pp. 22-27" beschrieben ist.

In einer bevorzugten Ausgestaltung der Erfindung ist der erste Schwellwert $X_1$ kleiner oder gleich 20%. Bevorzugt ist dieser Schwellwert kleiner oder gleich 10% und besonders bevorzugt kleiner 5%. Der zweite Schwellwert $X_2$ ist kleiner oder gleich 20%, bevorzugt kleiner oder gleich 10%, besonders bevorzugt kleiner 5%. Der dritte Schwellwert $X_3$ ist kleiner oder gleich 20%, bevorzugt kleiner 10%, besonders bevorzugt kleiner 5%. Für den vierten Schwellwert $X_4$ gelten dieselben Prozentwerte wie bei $X_1$, $X_2$ und $X_3$. Diese Schwellwerte liefern Ankerplattendicken, bei welcher die entsprechend gefertigte Ankerplatte eine näherungsweise lineare Kraftverteilung der Anker und ein lineares Verformungsprofil aufweist. Insbesondere die bevorzugten und die besonders bevorzugten Schwellwerte liefern eine solche Ankerplattendicke. Die Schwellwerte $X_1$ bis $X_4$ können voneinander abhängig sein.

Ein weiterer Gegenstand der Erfindung ist es, eine Vorrichtung zur Bestimmung einer Ankerplattendicke einer aus Stahl gefertigten Ankerplatte in einer an Beton zu befestigenden Ankerplattenanordnung, welche die Ankerplatte, eine Mehrzahl von in den Beton eingreifenden Ankern und ein mit der Ankerplatte verbundenes Profil umfasst, vorzuschlagen. Die Vorrichtung umfasst eine Eingabeeinheit zur Eingabe der Parameter, wie sie unter Anspruch 1 definiert und eingangs in der Beschreibung näher spezifiziert sind. Weiter umfasst die Vorrichtung eine Recheneinheit, die dazu ausgelegt und bestimmt ist, ein Verfahren nach einem der Ansprüche 1 bis 8 durchzuführen und eine Ausgabeeinheit zum Ausgeben der von der Recheneinheit berechneten Dicke $d_{opt}$ und/oder $d_{linear}$. Zudem ist die Recheneinheit insbesondere dazu ausgelegt, den Vergleich gemäß des Anspruchs 3 durchzuführen. Die erfindungsgemäße Vorrichtung kann dadurch realisiert werden, dass ein Prozessor ein in einem Speicher gespeichertes Programm, d.h. eine Software, ausführt. Wenigstens eine der Einheiten der Vorrichtung kann aber auch durch Hardware oder durch Zusammenwirken von Hardware- und Software-Komponenten realisiert werden. Das Programm kann im Voraus in einer Speichervorrichtung, beispielsweise einer Festplatte oder einem Flash-Speicher, gespeichert sein oder auf einem Wechseldatenträger, beispielsweise einer DVD oder einer CD-ROM oder einem USB-Stick oder einer SSD-Speicherkarte, gespeichert sein und auf einer Speichervorrichtung installiert werden, wenn das Speichermedium in eine entsprechende Laufwerksvorrichtung eingelegt oder an einen entsprechenden Anschluss angeschlossen wird. Schließlich ist es auch denkbar, die Software als SaaS-Produkt (Saas = Software as a Service) auf einem Server bereitzustellen, auf den beispielsweise über einen Webbrowser zugegriffen werden kann.

Die Erfindung betrifft weiter ein Computerprogramm, welches Instruktionen umfasst, die dann, wenn das Programm auf einem Computer ausgeführt wird, den Computer dazu veranlassen, das Verfahren nach einem oder mehreren der Ansprüche 1 bis 8 auszuführen. In dem Computerprogramm sind die Formeln (1) bis (4) enthalten und insbesondere ist das Programm ausgelegt, um die Ankerplattendicke $d_0$ nach von-Mises zu bestimmen. Insbesondere ist das Computerprogramm in dem Modul C-FIX der Software FiXperience Online integriert.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind möglich.

Die Erfindung wird nachfolgend anhand der beigefügten Zeichnungen an einem Ausführungsbeispiel erläutert

Es zeigen:

Figur 1    eine perspektivische Ansicht einer Ankerplattenanordnung, deren Ankerplatte mit Hilfe des erfindungsgemäßen Verfahrens ausgelegt werden kann; und

Figur 2    ein zweidimensionales Achsendiagramm, dessen Abszisse den Abstand s des höchst belasteten Ankers $A_1$ vom niedrigst belasteten Ankers $A_2$ abbildet und an dessen Ordinate die Kräfte auf den Anker $A_1$ und $A_2$ aufgetragen sind.

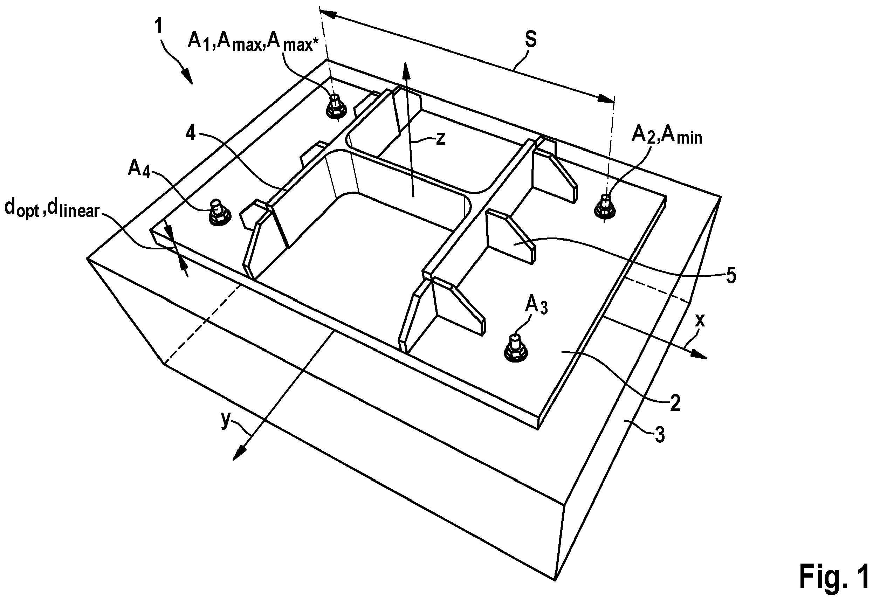

Figur 1 zeigt beispielhaft eine Ankerplattenanordnung 1 bei welcher eine Ankerplatte 2 auf einer Betonoberfläche eines Betons 3 mittels Ankern $A_1$ bis $A_4$ befestigt ist. Die Ankerplatte 2 weist ein rechteckiges Profil auf. Die Anker $A_1$ bis $A_4$ sind symmetrisch auf der Ankerplatte 2 angeordnet. Dies bedeutet, dass deren jeweilige Abstände zur entsprechenden Außenkante der Ankerplatte 2 in X-Richtung und in Y-Richtung identisch sind. Die Ankerplatte 2 weist ein H-förmiges Profil 4 auf, welches symmetrisch auf der Ankerplatte 2 angeordnet ist und gleichzeitig das Ende eines mit der Ankerplatte 2 verbundenen H-Trägers (nicht dargestellt) bildet. Das Profil 4 ist mittels Aussteifungen 5 verstärkt. Zur Durchführung eines computerimplementierten Verfahrens zur Bestimmung einer optimierten Ankerplattendicke $d_{opt}$, bei welcher die Ankerplatte 2 in der dargestellten Anordnung eine lineare Kraftverteilung und ein lineares Verformungsprofil aufweist, müssen insbesondere in dem Softwaremodul C-FIX der Software FiXperience Online als Eingangsparameter der Verankerungsgrund, also der Beton 3, die Ankerplattengeometrie, die Stahlgüte der Ankerplatte 2, der Ankertyp der Anker $A_1$ bis $A_4$, die Ankeranordnung auf der Ankerplatte 2, die Ankerdurchmesser und die Verankerungstiefe, die Profilparameter sowie deren Anordnung auf der Ankerplatte 2, die Aussteifungen der Ankerplatte sowie die Einwirkung auf die Ankerplattenanordnung 1 definiert werden. Unter der Einwirkung ist die Last die in X-, Y- und Z-Richtung auf die Ankerplattenanordnung 1 einwirkt, sowie insbesondere das Biegemoment und das Torsionsmoment und deren Kombination zu verstehen.

Ein erstes Auslegungsverfahren zur Bestimmung einer Ankerplatte 2 mit einer optimierten Mindestdicke $d_{opt}$ ist möglich, solange keine rein zentrische Zuglast auf die Ankerplattenanordnung 1 wirkt. Zur Bestimmung von $d_{opt}$ berechnet die Software in dem ersten Auslegungsverfahren eine Ankerplattendicke $d_0$ nach der Spannungshypothese nach von-Mises unter der Berücksichtigung der Eingangsparameter. Bei dieser Ankerplattendicke $d_0$ bleibt die Ankerplatte 2 in der Ankerplattenanordnung 1 stets elastisch und weist keine plastische Verformung auf. Das Ergebnis lediglich von $d_0$ kann dazu führen, dass eine zu dünne Ankerplatte 2 entstehen würde, und dadurch die Anforderung einer ausreichend steifen Ankerplatte nicht erfüllt wäre. Um zu $d_{opt}$ zu gelangen berechnet die Software weiter eine idealisierte Kraftverteilung $N_{1S}$ bis $N_{4S}$ eines jeden Ankers $A_1$ bis $A_4$ unter der Annahme einer idealisieren Ankerplatte mittels eines linearen Federmodells und mittels FEM. Es wird angenommen, dass die Kräfte linear verteilt sind und die Ankerplatte 2 steif ist. Weiter berechnet die Software eine realitätsnahe Kraftverteilung $N_1$ bis $N_4$ auf jeden der Anker $A_1$ bis $A_4$ mittels eines linearen Federmodells und mittels FEM, welche in der Software integriert sind. Anschließend iteriert die Software zur Bestimmung einer möglichst geringen Ankerplattendicke $d_1$ die Formel (1) derart oft, bis die größte prozentuale Abweichung der idealisierten Kraft des höchst belasteten Ankers $A_{max}$, der in der Ankerplattenanordnung als $A_1$ angenommen wird, von der realitätsnahen Kraft des Ankers $A_1$ gerade noch unter oder bei einem Schwellwert $X_1$ = 5% liegt.

Weiter iteriert die Software zur Bestimmung einer möglichst geringen Ankerplattendicke $d_2$ die Formel (2) derart oft, bis die maximale prozentuale Abweichung der Summe der realitätsnahen Kräfte jedes Ankers $A_1$ bis $A_4$ von der Summe der idealisierten Kräfte der Anker $A_1$ bis $A_4$ gerade noch unter oder bei einem Schwellwert $X_2$ = 5% liegt.

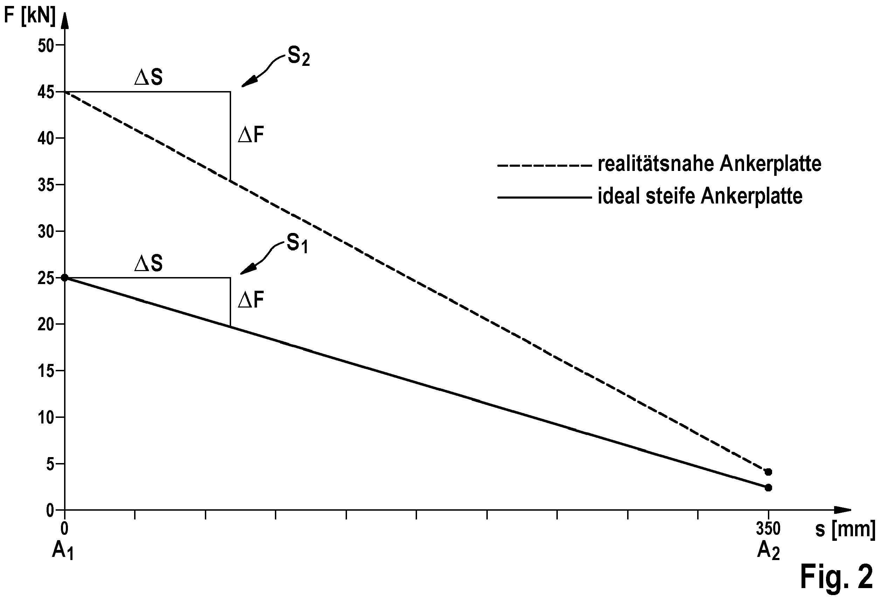

Zur Verdeutlichung eines weiteren Rechenschritts und zum Verständnis der oben aufgeführten Formel (3) wird im Folgenden auf Figur 2 verwiesen, die ein zweidimensionales Achsendiagramm zeigt, dessen Abszisse den Abstand s des höchst belasteten Ankers $A_1 = A_{max}$ vom niedrigst belasteten Ankers $A_2 = A_{min}$ abbildet und an dessen Ordinate die Kräfte auf die Anker $A_1$ und $A_2$ aufgetragen sind. Das Programm bestimmt eine erste Kraftdifferenz $S_1$, die als eine erste Steigung aufgefasst werden kann zwischen der idealisierten Kraft des höchst belasteten Ankers $A_1$ und des niedrigst belasteten Ankers $A_2$ unter der Annahme einer idealisierten steifen Ankerplatte (Vgl. durchgezogene Linie) sowie eine zweite Kraftdifferenz $S_2$, die als zweite Steigung aufgefasst werden kann zwischen den realitätsnahen Kräften auf die Anker $A_1$ und $A_2$ unter Annahme einer realitätsnahen, nachgiebigen Ankerplatte (Vgl. gestrichene Linie). Zur Bestimmung einer möglichst geringen Ankerplattendicke $d_3$ iteriert die Software die Formel (3) derart oft, bis die Abweichung der Kraftdifferenzen $S_1$ und $S_2$ voneinander gerade noch unter oder bei einem Schwellwert $X_3$ = 5% liegt.

Abschließend vergleicht die Software die Ankerplattendicken $d_0$, $d_1$, $d_2$, und $d_a$ miteinander und wählt die größte Ankerplattendicke aus, welcher einer Ankerplattendicke $d_{opt}$, entspricht, also einer Ankerplatte mit einer optimierten Mindestdicke.

Liegt eine reine oder im Wesentlichen zentrische Zuglast in der Ankerplattenanordnung vor, versagt das oben dargestellte erste Auslegungsverfahren, da Formel (3) aufgrund der Divergenz im Nenner keine oder keine verwertbaren realitätsnahen Ergebnisse liefert. In diesem Fall wird ein zweites Auslegungsverfahren verwendet, bei welchem die Software den Anker $A_{max*}$ mit der größten prozentualen Abweichung zwischen der idealisierten und der realitätsnah berechneten Kraft aller Anker ermittelt. Dieser ist weiterhin in der dargestellten Ankerplattenanordnung 1 der Anker $A_1$. Weiter iteriert die Software zur Bestimmung einer möglichst geringen Ankerplattendicke $d_4$ die Formel (4) derart oft, bis die größte prozentuale Abweichung gerade noch unter oder bei einem vierten Schwellwert von $X_4$ = 5% liegt und vergleicht den Wert von $d_4$ mit dem Wert $d_0$. Der größere der beiden Werte beschreibt eine Ankerplattendicke $d_{linear}$, welche ebenfalls eine Ankerplatte mit einer linearen Kraftverteilung und einem linearen Verformungsprofil beschreibt.

Das erste Auslegungsverfahren ist im Falle einer nicht-zentrischen Zuglast ausgesetzten Ankergruppe zu bevorzugen (z.B. Momentbeanspruchung um eine oder zwei Achsen, oder Kombination von Zug- und Momentbeanspruchung, oder exzentrische Zugbeanspruchung), da das erste Auslegungsverfahren zumeist eine Ankerplattendicke

$d_{opt}$ liefert, die in meisten Fällen geringer ist als die durch das zweite Auslegungsverfahren gewonnene Ankerplattendicke $d_{linear}$.

Das erfindungsgemäße Verfahren ist in einem Computerprogramm implementiert, insbesondere in dem Modul "C-FIX" der Software "FiXperience Online", welches es einem Benutzer schnell und einfach ermöglicht, eine optimierte Ankerplattendicke für eine geplante Ankerplattenanordnung 1 zu bestimmen oder eine bestehende Ankerplattenanordnung 1 zu überprüfen.

Ein Computer mit einer Eingabeeinheit, beispielsweise einer Tastatur, einer Recheneinheit und einer Ausgabeeinheit, beispielsweise einem Bildschirm, bildet eine Vorrichtung zur Bestimmung der optimierten Ankerplattendicke (nicht dargestellt).

Bezugszeichenliste

**Computerimplementiertes Verfahren zur Bestimmung einer optimierten Ankerplattendicke**

| | |
|---|---|
| 1 | Ankerplattenanordnung |
| 2 | Ankerplatte |
| 3 | Beton |
| 4 | Profil |
| 5 | Aussteifung |
| $A_1$ | Anker |
| $A_2$ | Anker |
| $A_3$ | Anker |
| $A_4$ | Anker |
| $A_{max}$ | Höchst belasteter Anker |
| $A_{max*}$ | Anker mit der höchsten prozentualen Abweichung zwischen der idealisierten und der realitätsnahen Kraft |
| $A_{min}$ | Niedrigst belasteter Anker |
| s | Abstand der Anker $A_1$ und $A_2$ auf der Ankerplatte 2 |
| X | Erstreckung in X-Richtung |
| Y | Erstreckung in Y-Richtung |
| Z | Erstreckung in Z-Richtung |

**Patentansprüche**

1. Computerimplementiertes Verfahren zur Bestimmung einer optimierten Mindestdicke $d_{opt}$ einer aus Stahl gefertigten Ankerplatte (2) in einer an Beton (3) zu befestigenden Ankerplattenanordnung (1), welche die Ankerplatte (2), eine Mehrzahl von in den Beton eingreifenden Ankern ($A_1$ - $A_4$) und ein mit der Ankerplatte (2) verbundenes Profil (4) umfasst, wobei zur Durchführung des Verfahrens die Parameter:

   - Verankerungsgrund,
   - Ankerplattengeometrie,
   - Stahlgüte der Ankerplatte,
   - Ankertyp und Ankeranordnung auf der Ankerplatte (2),
   - Ankerdurchmesser und Verankerungstiefe der Anker ($A_1$ - $A_4$),
   - Profilparameter und Profilanordnung auf der Ankerplatte (2),
   - Aussteifungen (5) der Ankerplatte (2) (optional), sowie die
   - Einwirkung auf die Ankerplatte (2)

   als Ausgangsgrößen festgelegt werden, wobei das Verfahren die Durchführung eines ersten Auslegungsverfahrens umfasst, wobei in dem ersten Auslegungsverfahren:

   a) eine Ankerplattendicke $d_0$ unter der festgelegten Einwirkung insbesondere nach der Spannungshypothese nach von-Mises so ausgelegt wird, dass die Ankerplatte (2) unter der Bemessungslast elastisch bleibt und sich nicht plastisch verformt,
   b) eine idealisierte Kraft $N_{iS}$ jedes Ankers ($A_1$ - $A_4$) in der Anordnung unter Annahme einer linearen Verteilung der Kräfte und einer starren Ankerplatte (2) bestimmt wird,

c) eine realitätsnahe Kraft $N_i$ auf jeden Anker ($A_1$ - $A_4$) in der Anordnung insbesondere mittels FEM bestimmt wird,

d) eine Ankerplattendicke $d_1$ derart bestimmt wird, dass sie möglichst klein ist und die größte prozentuale Abweichung der idealisierten Kraft des höchst belasteten Ankers ($A_{max}$) von der realitätsnahen Kraft dieses Ankers unter einem Schwellwert $X_1$ liegt.

e) eine Ankerplattendicke $d_2$ derart bestimmt wird, dass sie möglichst klein ist und die prozentuale Abweichung der Summe der realitätsnahen Kräfte jedes Ankers ($A_1$ - $A_4$) von der Summe der idealisierten Kräfte der Anker ($A_1$ - $A_4$) unter einem Schwellwert $X_2$ liegt.

f) eine erste Kraftdifferenz $S_1$ zwischen der idealisierten Kraft des höchst belasteten Ankers ($A_{max}$) und des niedrigst belasteten Ankers ($A_{min}$) und eine zweite Kraftdifferenz $S_2$ der realitätsnahen Kräfte zwischen denselben Ankern ($A_{max}$, $A_{min}$) ermittelt wird,

g) eine Ankerplattendicke $d_3$ derart bestimmt wird, dass sie möglichst klein ist und die Abweichung der Kraftdifferenzen $S_1$ und $S_2$ voneinander unter einem Schwellwert $X_3$ liegt,

wobei die größte der Ankerplattendicken $d_0$, $d_1$, $d_2$, und da eine Ankerplattendicke $d_{opt}$ definiert, bei welcher die Ankerplatte in der Ankerplattenanordnung ein lineares Verformungsprofil aufweist und die Kraftverteilung linear ist.

2. Verfahren nach Anspruch 1, **dadurch gekennzeichnet, dass** das Verfahren die Durchführung eines zweiten Auslegungsverfahrens insbesondere zur Berücksichtigung einer zentrischen Zuglast umfasst, wobei in dem zweiten Auslegungsverfahren

a) der Anker ($A_{max*}$) mit der größten prozentualen Abweichung zwischen der idealisierten und der realitätsnahen Kraftverteilung ermittelt wird, und

b) eine Ankerplattendicke $d_4$ derart bestimmt wird, dass sie möglichst klein ist und die größte prozentuale Abweichung unter einem vierten Schwellwert $X_4$ liegt,

wobei die größere der Ankerplattendicken $d_0$ und $d_4$ eine Ankerplattendicke $d_{linear}$ definiert, bei welcher die Ankerplatte in der Ankerplattenanordnung ein lineares Verformungsprofil aufweist und die Kraftverteilung linear ist.

3. Verfahren nach Anspruch 2, **dadurch gekennzeichnet, dass** der Wert $d_{opt}$ des ersten Auslegungsverfahrens und der Wert $d_{linear}$ des zweiten Auslegungsverfahrens miteinander verglichen werden.

4. Verfahren nach einem oder mehreren der vorhergehenden Ansprüche, **dadurch gekennzeichnet, dass** den Schritten b) und c) des ersten Auslegungsverfahrens ein, insbesondere lineares, Federmodell insbesondere in Kombination mit FEM zugrunde liegt.

5. Verfahren nach einem oder mehreren der vorhergehenden Ansprüche, **dadurch gekennzeichnet, dass** der erste Schwellwert $X_1$ kleiner oder gleich 20% ist.

6. Verfahren nach einem oder mehreren der vorhergehenden Ansprüche, **dadurch gekennzeichnet, dass** der zweite Schwellwert $X_2$ kleiner oder gleich 20% ist.

7. Verfahren nach einem oder mehreren der vorhergehenden Ansprüche, **dadurch gekennzeichnet, dass** der dritte Schwellwert $X_3$ kleiner oder gleich 20% ist.

8. Verfahren nach einem oder mehreren der vorhergehenden Ansprüche, **dadurch gekennzeichnet, dass** der vierte Schwellwert $X_4$ kleiner oder gleich 20% ist.

9. Ankerplatte erhältlich durch das Verfahren nach einem der vorhergehenden Ansprüche.

10. Vorrichtung zur Bestimmung einer Ankerplattendicke einer aus Stahl gefertigten Ankerplatte in einer an Beton zu befestigenden Ankerplattenanordnung, welche die Ankerplatte, eine Mehrzahl von in den Beton eingreifenden Ankern ($A_i$) und ein mit der Ankerplatte verbundenes Profil umfasst, die Vorrichtung umfassend:

eine Eingabeeinheit zum Eingeben folgender die Ankerplattenanordnung spezifizierende Parameter:

- Verankerungsgrund,
- Ankerplattengeometrie
- Stahlgüte

- Ankertyp und Ankeranordnung auf der Ankerplatte,
- Ankerdurchmesser und Verankerungstiefe der Anker,
- Profilparameter und Profilanordnung auf der Ankerplatte
- Aussteifungen der Ankerplatte (optional), sowie die
- Einwirkung auf die Ankerplatte

eine Recheneinheit, die dazu ausgelegt und bestimmt ist, ein Verfahren nach einem der Ansprüche 1 bis 8 durchzuführen und eine Ausgabeeinheit zum Ausgeben der von der Recheneinheit berechneten Dicke $d_{opt}$ der Ankerplatte.

11. Vorrichtung nach Anspruch 10, **dadurch gekennzeichnet, dass** die Recheneinheit dazu ausgelegt ist, den Vergleich gemäß des Anspruchs 3 durchzuführen.

12. Computerprogramm, welches Instruktionen umfasst, die dann, wenn das Programm auf einem Computer ausgeführt wird, den Computer dazu veranlassen, das Verfahren nach einem oder mehreren der Ansprüche 1 bis 8 auszuführen.

EP 4 261 730 A1

**Fig. 1**

Fig. 2

Europäisches Patentamt
European Patent Office
Office européen des brevets

# EUROPÄISCHER RECHERCHENBERICHT

Nummer der Anmeldung

EP 23 16 5760

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | B. BOKORT ET AL: "Displacement-Based Design of Anchorages in Concrete – The future of fastening technology", CONCRETE INTERNATIONAL, Bd. 44, Nr. 2, 1. Februar 2022 (2022-02-01), Seiten 22-27, XP002809814, * das ganze Dokument * * Abbildungen 1,2 * * Abbildung 5 * * section "General Concept" * * section "Anchor stiffness modeled using linear (elastic) springs" * * section "Software Implementation" * ----- | 1-12 | INV. G06F30/17 G06F30/23 ADD. G06F119/14 |
| X | Ies ET AL: "VX: Base Plate Design – FEA", , 18. September 2020 (2020-09-18), XP093067418, Gefunden im Internet: URL:https://www.youtube.com/watch?v=t7f7Q7 61YuY [gefunden am 2023-07-25] * das ganze Dokument * * 0:00 bis 0:15 * * 0:30 * * 1:00 bis 1:25 * * 1:35 bis 1:55 * * 3:35 bis 4:15 * * 4:15 bis 4:25 * * 5:45 bis 5:55 * * 6:44 bis 7:03 * ----- -/-- | 1-12 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 25. Juli 2023 | Rungger, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Seite 1 von 2

**EUROPÄISCHER RECHERCHENBERICHT**

**Nummer der Anmeldung**

**EP 23 16 5760**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Skyciv: "Steel Base Plate Design Software ¦ Base Plate Design for AISC, Eurocode and Australian Standards", , 1. Juli 2021 (2021-07-01), XP093067414, Gefunden im Internet: URL:https://www.youtube.com/watch?v=KGbEt8 rkoZU [gefunden am 2023-07-25] * das ganze Dokument * * 0:50 bis 1:00 * * 2:05 bis 2:45 * ----- | 1-12 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 25. Juli 2023 | Rungger, Matthias |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **B. BOKOR ; T. PREGARTNER ; A. SHARMA.** Displacement-Based Design of Anchorages in Concrete - The future of fastening technology. *Concrete International,* 2022, vol. 44 (2), 22-27

- Zusatzmodul RF-STAHL; Allgemeine Spannungsanalyse von Flächen und Stäben. *Programmbeschreibung, Dlubal Software GmbH,* Dezember 2017